## Europäisches Patentamt
## European Patent Office
## Office européen des brevets

(11) Veröffentlichungsnummer: **0 105 124**
**B1**

(12) # EUROPÄISCHE PATENTSCHRIFT

(45) Veröffentlichungstag der Patentschrift:
23.07.86

(51) Int. Cl.⁴: **F 16 H 3/08**

(21) Anmeldenummer: **83107647.6**

(22) Anmeldetag: **03.08.83**

(54) **Zahnräderwechselgetriebe in Gruppenbauweise.**

(30) Priorität: **06.10.82 DE 3236956**

(43) Veröffentlichungstag der Anmeldung:
**11.04.84 Patentblatt 84/15**

(45) Bekanntmachung des Hinweises auf die Patenterteilung:
**23.07.86 Patentblatt 86/30**

(84) Benannte Vertragsstaaten:
**AT DE FR GB IT NL**

(56) Entgegenhaltungen:
**AT-B-327 015**
**DE-A-2 404 844**
**DE-A-3 021 969**
**DE-B-2 346 116**
**FR-A-2 396 213**
**FR-A-2 396 898**
**GB-A-750 376**

(73) Patentinhaber: **Klöckner- Humboldt- Deutz Aktiengesellschaft, Deutz- Mülheimer- Strasse 111 Postfach 80 05 09, D-5000 Köln 80 (DE)**

(72) Erfinder: **Zenker, Walter, Pippelstein 49, D-5060 Bergisch Gladbach 3 (DE)**
Erfinder: **Hülsebusch, Karl- Heinz, Frankfurter Strasse 676, D-5000 Köln 90 (DE)**

## Beschreibung

Die Erfindung bezieht sich auf Zahnräderwechselgetriebe in Gruppenbauweise, insbesondere für Ackerschlepper, bestehend aus einem Hauptschaltgetriebe und einem diesem nachgeschalteten Gruppengetriebe, mit auf einer Hauptwelle angeordneten Zahnrädern, die von einer Eingangswelle aus wahlweise über Zahnräder einer Vorgelegewelle oder durch direktes Kuppeln von Eingangs- und Hauptwelle mit mehreren unterschiedlichen Drehzahlen antreibbar sind, wobei die Zahnräder der Hauptwelle wiederum mit frei drehbar auf einer Abtriebswelle gelagerten und mit dieser kuppelbaren Zahnrädern für Vorwärtsstufen des Gruppengetriebes in Eingriff stehen, und mit einem auf der Abtriebswelle frei drehbar gelagerten und mit dieser kuppelbaren Zahnrad für eine Rückwärtsstufe des Gruppengetriebes.

Bei einem bekannten Zahnräderwechselgetriebe der im Oberbegriff des Anspruchs 1 aufgeführten Gattung (DE-OS 24 04 844) ist zwischen einem drehfesten Zahnrad der Hauptwelle und dem auf der Abtriebswelle drehbar gelagerten Zahnrad für die Rückwärtsstufe des Gruppengetriebes ein Umkehrvorgelege mit zwei Zahnrädern angeordnet. Außerdem sind Schaltmuffen zur Schaltung von insgesamt fünf Gangstufen des Hauptschaltgetriebes gemeinsam mit dem entsprechenden drehbar gelagerten Zahnrädern teilweise auf der Hauptwelle und teilweise auf der Vorgelegewelle angeordnet. Zum Antrieb eines Kriechgangvorgeleges dieses Zahnräderwechselgetriebes ist ein besonderes, drehfest mit der Hauptwelle verbundenes Zahnrad vorgesehen, das ansonsten keinerlei Funktion hat. Alle diese Merkmale des bekannten Zahnräderwechselgetriebes führen zu einem insgesamt sehr aufwendigen und teueren Aufbau und unerwünscht großen Abmessungen des Getriebes. Die Anordnung der Schaltmuffen teilweise auf der Vorgelegewelle und teilweise auf der Hauptwelle wirkt sich nachteilig für die Anordnung der erforderlichen Schaltglieder und bei der Komplettierung bzw. Dekomplettierung der Vorgelegewelle und der Hauptwelle während der Fertigung oder der Reparatur des Getriebes aus.

Die der Erfindung zugrundeliegende Aufgabe besteht darin, diese Nachteile zu beheben und somit ein Zahnräderwechselgetriebe in Gruppenbauweise zu schaffen, das möglichst kompakt und aus einer geringen Anzahl von Bauelementen herstellbar ist, wobei allerdings eine große Anzahl unterschiedlicher Übersetzungsstufen mit möglichst gleichmäßiger Abstufung schaltbar sein soll.

Diese Aufgabe wird an einem Zahnräderwechselgetriebe der in Rede stehenden Gattung durch die im Kennzeichen des Anspruchs 1 aufgeführten Merkmale gelöst.

Durch die Doppelausnützung eines frei drehbar auf der Vorgelegewelle gelagerten Zahnrades als Gangrad des Hauptschaltgetriebes und als Umkehrrad zum Antrieb der Rückwärtsgruppe kann ein zusätzliches Umkehrvorgelege bzw. ein zusätzliche Umkehrrad eingespart werden. Dieses Zahnrad treibt hierbei in der ihn zugeordneten Gangstufe direkt von der Vorgelegewelle aus das Zahnrad für die Rückwärtsstufe an, wahrend in den anderen Gangstufen von dem drehfest auf der Hauptwelle angeordnete Zahnrad über dieses Umkehrrad die Rückwärtsgruppe betrieben wird. Neben der Einsparung eines besonderen Umkehrrades oder eines Umkehr-Vorgeleges lassen sich durch die erfindungsgemäße Lösung die Abmessungen des Zahnräderwechselgetriebes sehr klein halten, da die Vorgelegewelle und die Abtriebswelle eng Zusammenrücken.

In weiterer Ausgestaltung der Erfindung wird vorgeschlagen, daß auf der Vorgelegewelle frei drehbar gelagerte und mit dieser kuppelbare Zahnrad für die fünfte Gangstufe des Hauptschaltgetriebes als Umkehrrad vorzusehen. Hierdurch ergibt sich bei einem Hauptschaltgetriebe mit fünf oder sechs Gangstufen eine günstige Abstufung im Übersetzungsverhältnis der in der Rückwärtsgruppe geschalteten Gangstufen. Die Verwendung des Zahnrades der fünften Gangstufe läßt aber auch eine günstige geometrische Lage der drei Wellen zu.

Von erheblichem Vorteil ist weiterhin, wenn alle auf der Hauptwelle angeordneten Zahnräder mit Zahnrädern der Vorgelegewelle kämmen und wenn alle mit Zahnrädern der Abtriebswelle kämmenden Zahnräder der Hauptwelle drehfest auf der Hauptwelle angeordnet sind, während die mit diesen verbundenen Zahnräder der Vorgelegewelle auf der Vorgeschaltmuffen kuppelbar sind. Ersteres Merkmal bietet die Möglichkeit, sämtliche Zahnräder der Hauptwelle optimal zu nutzen und einen unnötigen Aufwand an Zahnrädern zu vermeiden.

Das zweite Merkmal stellt darauf ab, möglichst alle Schaltmuffen auf der Vorgelegewelle anzuordnen und jeweils zur Schaltung zweier Gangstufen heranzuziehen. Hieraus ergibt sich die Möglichkeit, die Schaltglieder für das Hauptschaltgetriebe genau wie die Schaltglieder des Gruppengetriebes in einfacher Weise anzuordnen. Auch ist es für die Fertigung des Zahnräderwechselgetriebes und spätere Montage- bzw. Demontagearbeiten von Vorteil, wenn auf einer Welle in erster Linie drehbar gelagerte Zahnräder und auf der anderen Welle in erster Linie drehfeste Zahnräder angeordnet sind. Ein weiterer Vorteil ergibt sich aus den geringen zu synchronisierenden Massen beim Schalten der Gangstufen.

In weiterer Ausgestaltung der Erfindung wird vorgeschlagen, daß zwischen den Zahnrädern der Vorgelegewelle und der Abtriebswelle, die jeweils über Zahnräder der Hauptwelle im Kraftfluß sind, dann ein seitlicher Versatz um zumindest eine halbe Zahnradbreite vorgesehen ist, wenn die Summe der Kopfkreisradien der betreffenden Zahnräder größer oder gleich der Summe der Kopfkreisradien des Zahnrades der Rückwärtsstufe und der als Umkehrrad vorgesehenen Zahnrades ist. Auf diese Weise ist gewährleistet, daß selbst bei geringem Abstand der Wellen zueinander und der daraus resultierenden kompakten Bauweise des Zahnräderwechselgetriebes außer dem als Umkehrrad vorgeschenen Zahnrad der Vorgelegewelle keine anderen Zahnräder mit Zahnrädern der Abtriebswelle kammen.

In den weiteren Unteransprüchen sind vorteilhafte Weiterbildungen der Erfindung beschrieben, die darauf abzielen, den Antrieb des Kriechgangvorgeleges zu vereinfachen.

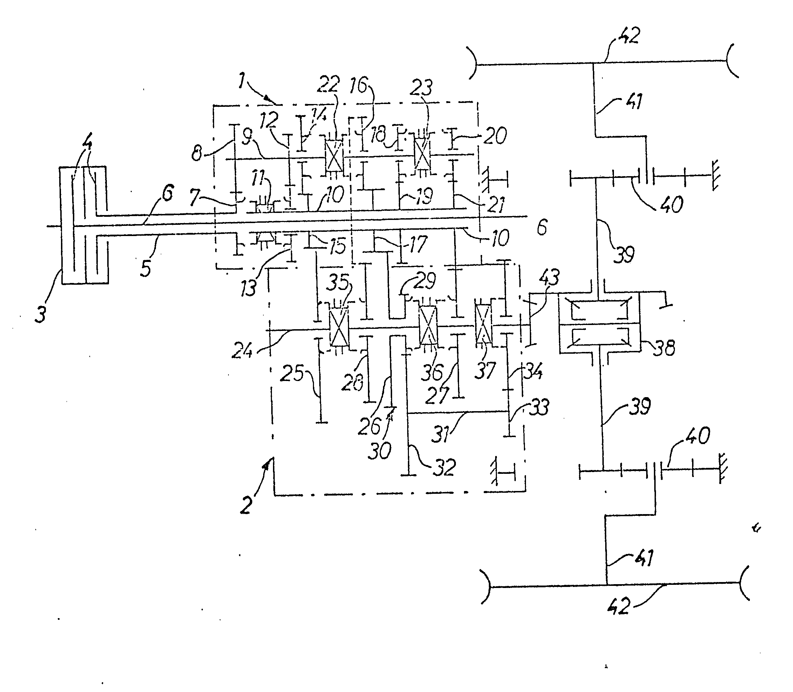

Zur weiteren Erläuterung der Erfindung wird auf die Zeichnung verwiesen, in der ein Ausführungsbeispiel vereinfacht dargestellt ist.

In der Zeichnung ist ein Zahnräderwechselgetriebe in Gruppenbauweise schematisch dargestellt, das aus einem Hauptschaltgetriebe 1 und einem diesem nachgeschalteten Gruppengetriebe 2 besteht. Ein Schwungrad 3 einer nicht dargestellten Brennkraftmaschine treibt über eine Doppelkupplung 4 eine als Hohlwelle ausgebildete Eingangswelle 5 und eine in dieser Hohlwelle 5 koaxial angeordnete Nebenantriebswelle 6, die beispielsweise als Zapfwelle eines Ackerschleppers vorgesehen ist, an. Auf der Eingangswelle 5 ist ein Zahnrad 7 drehfest angeordnet, welches mit einem Zahnrad 8 einer Vorgelegewelle 9 kämmt und auf diese Weise die Vorgelegewelle 9 ständig antreibt. Koaxial zur Eingangswelle, in Verlängerung dieser, ist eine ebenfalls als Hohlwelle ausgebildete Hauptwelle 10 angeordnet, die mittels einer Doppelschaltmuffe 11 direkt mit der Eingangswelle 5 kuppelbar ist. Im Anschluß an das Zahnrad 8 ist auf der Vorgelegewelle 9 ein weiteres drehfest mit dieser verbundenes Zahnrad 12 angeordnet, das mit einem auf der Hauptwelle drehbar gelagerten Zahnrad 13 im Eingriff steht. Mittels der bereits erwähnten Doppelschaltmuffe 11 läßt sich neben der geschilderten Verbindung zwischen Eingangswelle 5 und Hauptwelle 10 in einer zweiten Stellung das Zahnrad 13 mit der Hauptwelle 10 kuppeln. Im Hauptschaltgetriebe 1 sind auf der Vorgelegewelle 9 und der Hauptwelle 10 weiterhin miteinander kämmende Zahnradpaare 14-15, 16-17, 18-19 und 20-21 angeordnet. Bei diesen Zahnradpaaren ist das jeweils auf der Vorgelegewelle 9 angeordnete Zahnrad 14, 16, 18, 20 auf dieser frei drehbar gelagert, während das jeweilige Zahnrad 15, 17, 19, 21 der Hauptwelle 10 drehfest mit dieser verbunden ist. Die Zahnräder 14 und 16 sind wechselseifig mittels einer Doppelschaltmuffe 22, die Zahnräder 18 und 20 mittels einer Doppelschaltmuffe 23 mit der Vorgelegewelle 9 kuppelbar.

Weiterhin kämmen die drehfest auf der Hauptwelle 10 angeordneten Zahnräder jeweils mit frei drehbar auf einer Abtriebswelle 24 angeordneten Zahnrädern, und bilden dabei Zahnradpaare 15-25, 17-26 und 21-27. Neben dem Zahnrad 25 ist auf der Abtriebswelle 24 ein Zahnrad 28 frei drehbar gelagert, das direkt mit dem Zahnrad 16 der Vorgelegewelle 9 kämmt. Das auf der Abtriebswelle 24 angeordnete Zahnrad 26 ist mit einem Zahnrad 29 zu einem Doppelrad 30 zusammengefaßt, wobei das im Teilkreisdurchmesser kleinere Zahnrad 29 ein Kriechgangvorgelege 31 über ein Eingangszahnrad 32 antreibt. Ein Ausgangszahnrad 33 des Kriechgangvorgeleges 31 kämmt wiederum mit einem frei drehbar auf der Abtriebswelle 24 gelagerten Zahnrad 34.

Die auf der Abtriebswelle drehbaren, nebeneinanderliegenden Zahnräder 25 und 28 werden über eine wechselseitig wirkende Doppelschaltmuffe 35, das Doppelrad 30 und das Zahnrad 27 über ein Doppelschaltmuffe 36 und das Zahnrad 34 über eine Schaltmuffe 37 mit der Abtriebswelle gekuppelt. Von der Abtriebswelle 24 aus ist ein Differentialgetriebe 38 über ein Kegelrad 43 antreibbar. Vom Differentialgetriebe 38 werden jeweils über ein Vorgelege 39 und über als Umlaufrädertriebe ausgebildete Endantriebe 40, Treibachsen 41 und Treibräder 42 angetrieben.

Im Hauptschaltgetriebe bilden die Zahnräder 20 und 21 die Gangstufe I durch Kuppeln des Zahnrades 20 auf der Vorgelegewelle 9 mittels der Doppelschaltmuffe 23. Wird die Doppelschaltmuffe 23 nach links verschoben, so ist das Zahnrad 18 auf der Vorgelegewelle 9 gekuppelt, welches zusammen mit dem Zahnrad 19 der Hauptwelle 10 die Gangstufe II bildet. Weiterhin wird die Gangstufe III durch das Kuppeln des Zahnrades 13 auf der Hauptwelle 10 mittels der Doppeltschaltmuffe 11 geschaltet, so daß ein Kraftfluß von der Vorgelegewelle 9 zur Hauptwelle 10 über die Zahnräder 12 und 13 erfolgt. Wenn diese Doppelschaltmuffe 11 in ihre linke Endposition verschoben ist, so verbindet sie die Eingangswelle 5 direkt mit der Hauptwelle 10, dann ist die Gangstuffe IV des Hauptschaltgetriebes 1 eingelegt. Die Gangstufen V und VI werden über eine Doppelschaltmuffe 22 geschaltet. In der rechten Schaltstellung dieser Doppelschaltmuffe 22 ist das Zahnrad 16 drehfest mit der Vorgelegewelle verbunden und treibt das drehfest auf der Hauptwelle 10 gelagerte Zahnrad 17 zur Bildung der Gangstufe V an. In der linken Stellung der Doppelschaltmuffe 22 sind die Vorgelegewelle 9 und das Zahnrad 14 miteinander verbunden, so daß die Hauptwelle 10 über das Zahnrad 15 in der Gangstufe VI angetrieben ist.

Im Gruppengetriebe kann jede dieser Gangstufen I bis VI einer bestimmten Gruppenstufe zugeordnet werden. Es sind dies eine Kriechganggruppe (K), eine Langsamgruppe (L), eine Mittelgruppe (M) und eine Schnellganggruppe (H). Außerdem ist eine Rückwärtsgruppe (R) schaltbar.

Befindet sich die Schaltmuffe 37 in ihrer rechten Position, so ist das Zahnrad 34 auf der Abtriebswelle 24 drehfest und es erfolgt ein Kraftfluß von der Hauptwelle 10 über das Zahnrad 17, das Doppelrad 30, das Kriechgangvorgelege 31 und das Zahnrad 34 mit der Übersetzung der Kriechganggruppe (K) auf die Abtriebswelle 24.

In der Langsamgruppe (L) des Gruppengetriebes 2 befindet sich die Doppelschaltmuffe 35 in ihrer linken Stellung und verbindet das Zahnrad 25 mit der Abtriebswelle 24, so daß ein Kraftfluß von der Hauptwelle 10 aus über das Zahnrad 15, das Zahnrad 25 auf die Abtriebswelle 24 erfolgt.

In der Gruppenstufe M ist die Doppelschaltmuffe 36 nach links verschoben und verbindet das Doppelrad 30 mit der Abtriebswelle 24, so daß von der Hauptwelle 10 aus über das Zahnrad 17, und das Doppelrad 30 die Abtriebswelle mit der Übersetzung der M-Gruppenstufe in Drehung versetzt wird.

Ist diese Doppelschaltmuffe 36 in ihre rechte Endposition verschoben, so kuppelt sie das Zahnrad 27 auf der Abtriebswelle 24 und die Hauptwelle 10 treibt über das Zahnradpaar 21-27 die Abtriebswelle 24 mit der größten Übersetzungsstufe H an.

Die Rückwärtsgruppe des Gruppengetriebes 2 wird mit Hilfe der Doppelschaltmuffe 35 geschaltet, die das Zahnrad 28 mit der Abtriebswelle 24 verbindet. Da dieses Zahnrad 28 mit dem frei drehbar auf der Vorgelegewelle angeordneten Zahnrad 16 für die Gangstufe V des Hauptschaltgetriebes kämmt, wird die Abtriebswelle 24 in den Gangstufen I, II, III, IV und VI jeweils von der Hauptwelle 10 aus über die Zahnräder 17, 16 und 28 mit Drehrichtungsumkehr angetrieben. In der Gangstufe V treibt das mit der Vorgelegewelle verbundene Zahnrad 16 direkt das auf der Abtriebswelle 24 gekuppelte Zahnrad an.

Der Zeichnung kann entnommen werden, daß bei der Verwendung einer geringen Anzahl von Zahnrädern bei dem Ausführungsbeispiel insgesamt 24 unterschiedliche Fahrzeuggeschwindigkeiten für die Vorwärtsrichtung und außerdem sechs Fahrgeschwindigkeiten für die Rückwärtsrichtung schaltbar sind. Weiterhin läßt sich das Zahnräderwechselgetriebe in kompakter Bauweise herstellen, da die besondere Verwendung eines zusätzlichen Umkehrrades nicht erforderlich ist. Die Zahnräder 14, 15 und 25 sind, wie aus der Zeichnung zu entnehmen ist, so versetzt zueinander angeordnet, daß diese gedrungene Bauweise und vorteilhafte Ausnutzung des Zahnrades 16 als Umkehrrad bei einer günstigen Getriebeabstufung möglich ist.

**Patentansprüche**

1. Zahnräderwechselgetriebe in Gruppenbauweise, insbesondere für Ackerschlepper, bestehend aus einem Hauptschaltgetriebe (1) und einem diesem nachgeschalteten Gruppengetriebe (2), mit auf einer Hauptwelle (10) angeordneten Zahnrädern, die von einer Eingangswelle (5) aus wahlweise über Zahnräder einer Vorgelegewelle (9) oder durch direktes Kuppeln von Eingangs- (5) und Hauptwelle (10) mit mehreren unterschiedlichen Drehzahlen antreibbar sind, wobei die Zahnräder der Hauptwelle (10) wiederum mit frei drehbar auf einer Abtriebswelle (24) gelagerten und mit dieser kuppelbaren Zahnrädern für Vorwärtsstufen des Gruppengetriebes (2) in Eingriff stehen, und mit einem auf der Abtriebswelle (24) frei drehbar gelagerten und mit dieser kuppelbaren Zahnrad (28) für eine Rückwärtsstufe des Gruppengetriebes (2),

dadurch gekennzeichnet, daß ein frei drehbar auf der Vorgelegewelle (9) gelagertes und mit dieser kuppelbares Zahnrad (16), das mit einem drehfest auf der Hauptwelle (10) angeordneten Zahnrad (17) kämmt, gleichzeitig als Umkehrrad mit dem Zahnrad (28) der Rückwärtsstufe des Gruppengetriebes (2) im Eingriff steht.

2. Zahnräderwechselgetriebe nach Anspruch 1, dadurch gekennzeichnet, daß das auf der Vorgelegewelle (9) frei drehbar gelagerte und mit dieser kuppelbare Zahnrad (16) für die fünfte Gangstufe des Hauptschaltgetriebes (1) als Umkehrrad vorgesehen ist.

3. Zahnräderwechselgetriebe nach einem der vorhergehenden Ansprüche, dadurch gekennzeichnet, daß alle auf der Hauptwelle (10) angeordneten Zahnräder (13, 15, 17, 19, 21) mit Zahnrädern (12, 14, 16, 18, 20) der Vorgelegewelle (9) kämmen.

4. Zahnräderwechelgetriebe nach einem der vorhergehenden Ansprüche, dadurch gekennzeichnet, daß alle mit Zahnrädern (25, 26, 27) der Abtriebswelle (24) kämmenden Zahnräder (15, 17, 21) der Hauptwelle (10) drehfest auf der Hauptwelle (10) angeordnet sind, während die mit diesen verbundenen Zahnräder (14, 16, 20) der Vorgelegewelle (9) auf der Vorgelegewelle (9) drehbar gelagert und mit dieser mittels Doppelschaltmuffen (22, 23) kuppelbar sind.

5. Zahnräderwechselgetriebe nach einem der vorhergehenden Ansprüche, dadurch gekennzeichnet, daß zwischen den Zahnrädern (14, 16, 20 bzw. 25, 26, 27) der Vorgelegewelle (9) und der Abtriebswelle (24), die jeweils über ein Zahnrad (15, 17, 21) der Hauptwelle (10) in Kraftfluß sind, dann ein seitlicher Versatz um zumindest eine halbe Zahnradbreite vorgesehen ist, wenn die Summe der Kopfkreisradien dieser erstgenannten Zahnräderpaare größer oder gleich der Summe aus den Kopfkreisradien des Zahnrades (28) der Rückwärtsstufe und des als Umkehrrad vorgesehenen Zahnrades (16) ist.

6. Zahnräderwechselgetriebe nach einem der vorhergehenden Ansprüche, bei dem parallel zur Abtriebswelle ein Kriechgangvorgelege angeordnet ist, dessen Eingangszahnrad mit einem in seinem Teilkreisdurchmesser kleineren Zahnrad eines auf der Abtriebswelle gelagerten Doppelrades in Eingriff steht, dadurch gekennzeichnet, daß ein zweites in seinem Teilkreisdurchmesser größeres Zahnrad (26) des Doppelrades (30) direkt von einem Zahnrad (16) der Vorgelegewelle (9) aus über ein drehfestes Zahnrad (17) der Hauptwelle (10) antreibbar ist.

7. Zahnräderwechselgetriebe nach einem der vorhergehenden Ansprüche, dadurch gekennzeichnet, daß das im Teilkreisdurchmesser größere Zahnrad (26) des Doppelrades (30) von dem als Umkehrrad dienenden Zahnrad (16) der Vorgelegewelle (9) über das Zahnrad (17) der Hauptwelle (10) antreibbar ist.

## Claims

1. A gearbox having groups of gear trains, particularly for a tractor, the gearbox comprising a main gear-shift mechanism (1) and, connected to the outlet side thereof, an auxiliary transmission (2), in which the gear wheels mounted on the main shaft (10) are arranged to be driven at different speeds by a primary shaft (5) either via gear wheels of a lay shaft (9) or, alternatively, through coupling the primary shaft (5) directly to the main shaft (10), in which the gear wheels of the main shaft (10) mesh, for the "forward gears" of the auxiliary transmission (2), with gear wheels rotatably mounted on yet capable of being coupled to the driven shaft (24), and in which the main shaft's gear wheels mesh, for the "reverse gears" of the auxiliary transmission (2) with a further gear wheel (28) rotatably mounted on yet capable of being coupled to the driven shaft (24), characterized in that another gear wheel (16) which is rotatably mounted on yet capable of being coupled to the lay shaft (9) meshes with a gear wheel (17) mounted rotationally fast on the main shaft (10), and in that said other gear wheel (16) simultaneously serves as a reversing gear wheel and meshes with the further gear wheel (28) for the "reverse gears" of the auxiliary transmission (2).

2. A gearbox according to claim 1, characterized in that the other gear wheel (16) rotatably mounted on yet capable of being coupled to the lay shaft (9) serves as the reversing gear wheel for the ""fifth gear" of the main gear-shift mechanism (1).

3. A gearbox according to claim 1 or claim 2, characterized in that all the gear wheels (13, 15, 17, 19, 21) mounted on the main shaft (10) mesh with a respective one of the gear wheels (12, 14, 16, 18, 20) mounted on the lay shaft (9).

4. A gearbox according to any of the preceding claims, characterized in that those gear wheels (15, 17, 21) of the main shaft (10) that mesh with respective gear wheels (25, 26, 27) of the driven shaft (24) are mounted rotationally fast on the main shaft (10) whilst the lay shaft's (9) gear wheels (14, 16, 20) in engagement with those gear wheels of the main shaft are rotatably mounted on the lay shaft (9) yet are capable of being coupled thereto by means of duplex gear-shift sleeves (22, 23).

5. A gearbox according to any of the preceding claims, characterized in that the gear wheels (14, 16, 20 and 25, 26, 27 respectively) of the lay shaft (9) and the driven shaft (24) respectively - the gear wheels of the one shaft being in power-transmitting engagement with the respective ones of the other shaft via the respective gear wheels (15, 17, 21) of the main shaft (10) - are laterally displaceable over a distance equal to at least one half of the width of a gear wheel if the sun of the crown circle radii of the pairs of gear wheels first referred to is greater than or equal to the sum of the crown circle radii of the gear wheel (28) for the "reverse gears" and of the gear wheel (16) which serves as the reversing gear wheel.

6. A gearbox according to any of the preceding claims, in which a creep-speed lay shaft is arranged parallel with the driven shaft, the input gear wheel of the creep-speed lay shaft meshing with the gear wheel of smaller pitch circle of a twin gear wheel mounted in the driven shaft, characterized in that the second gear wheel (26) of larger pitch circle diameter of the twin gear wheel (30) is arranged to be driven by the gear wheel (16) of the lay shaft (9) via the gear wheel (17) mounted rotatably fast on the main shaft (10).

7. A gearbox according to any of the preceding claims, characterized in that the gear wheel (26) of the larger pitch circle diameter of the twin gear wheel (30) is arranged to be driven by the lay shaft's (9) gear wheel (16), which serves as the reversing wheel, via the gear wheel (17) of the main shaft (10).

## Revendications

1°) Boîte de vitesses à pignons dentés à structure de groupe notamment pour tracteurs agricoles, comprenant une boîte principale (1) et une boîte de groupe (2) en aval, avec des pignons dentés portés par un arbre principal (10), pignons qui sont susceptibles d'être entraînés à partir d'un arbre d'entrée (5), sélectivement par des pignons dentés d'un arbre intermédiaire (9) ou par couplage direct de l'arbre d'entrée (5) et de l'arbre principal (10), suivant plusieurs vitesses de rotation différentes, les pignons dentés de l'arbre principal (10) étant eux-mêmes montés libres en rotation sur un arbre de sortie (24) et étant pris avec les pignons dentés susceptibles d'être couplés à celui-ci pour les vitesses de marche avant de la boîte de groupe (2), et avec un pignon denté (28) monté libre à rotation sur l'arbre de sortie (24) et susceptible d'être couplé à celui-ci pour la marche arrière de la boîte de groupe (2), caractérisée par un pignon denté (16) libre en rotation sur l'arbre intermédiaire (9) et susceptible d'être couplé à celui-ci, pignon qui engrène avec un pignon denté (17) monté solidaire en rotation sur l'arbre principal (10), et ce pignon engrène en même temps comme pignon d'inversion avec le pignon denté (28) de la marche arrière de la boîte de groupe (2).

2°) Boîte de vitesses a pignons dentés selon la revendication 1, caractérisée en ce que le pignon denté est monté libre en rotation sur l'arbre intermédiaire (9) et qui peut être couplé à celui-ci constitue le pignon d'inversion pour la cinquième vitesse de la boîte principale (1).

3°) Boîte de vitesses à pignons dentés selon l'une des revendications précédentes, caractérisée en ce que tous les pignons dentés (13, 14, 17, 19, 21) prévus sur l'arbre principal (10) engrènent avec les pignons dentés (12, 13, 16, 18, 20) de l'arbre intermédiaire (9).

4°) Boîte de vitesses a pignons dentés selon l'une des revendications précédentes, caractérisée en ce que tous les pignons dentés (15, 17, 21) de l'arbre principal (10) qui engrènent avec les pignons dentés (25, 26, 27) de l'arbre de sortie (24) sont solidaires en rotation de l'arbre principal (10), alors que les pignons dentés (14, 16, 20) de l'arbre intermédiaire (9) et qui sont reliés aux pignons précédents, sont montés à rotation sur l'arbre intermédiaire (9) et peuvent être couplés à celui-ci par des doubles manchons d'embrayage (22, 23).

5°) Boîte de vitesses à pignons dentés selon l'une des revendications précédentes, caractérisée en ce qu'entre les pignons dentés (14, 16, 20 et 25, 26, 27) de l'arbre intermédiaire (9) et de l'arbre de sortie (24), pignons qui sont associés aux chemins des efforts par un pignon denté respectif (15, 17, 21) de l'arbre principal (10), il est prévu un décalage latéral correspondant au moins à une demi-largeur de pignons dentés, si la somme des rayons des cercles de tête de ces paires de pignons dentés mentionnées en premier lieu est supérieure ou égale a la somme des rayons des cercles de tête du pignon denté (28) de la marche arrière et du pignon denté (16) prévu comme pignon d'inversion.

6°) Boîte de vitesses à pignons dentés selon l'une des revendications précédentes dans laquelle, en parallèle à l'arbre de sortie, il est prévu un axe intermédiaire de vitesse tout terrain dont le pignon denté d'entrée est en prise avec un pignon denté dont le diamètre du cercle primitif est plus petit et qui fait partie d'un double pignon monté sur l'arbre de sortie, caractérisée par un second pignon denté (26) de diamètre de cercle primitif plus grand pour le double pignon (30), qui peut être entraîné directement par un pignon denté (16) de l'arbre intermédiaire (9) par un pignon denté (17) solidaire en rotation de l'arbre principal (10).

7°) Boîte de vitesses à pignons dentés selon l'une des revendications précédentes, caractérisée en ce que le pignon denté (26) dont le diamètre du cercle primitif est le plus grand et qui fait partie du double pignon (30) est susceptible d'être entraîné par le pignon (16) de l'arbre intermédiaire (9) qui sert de pignon d'inversion par l'intermédiaire du pignon denté (17) de l'arbre principal (10).